# EUROPEAN PATENT APPLICATION

(11) **EP 0 618 411 A2**
(43) Date of publication of application: **05.10.1994**
(21) Application number: 94104954.6
(22) Date of filing: 29.03.1994
(51) Int. Cl.: F24J 2/46

(54) **Solar collector**

(30) Priority: 01.04.1993 IL 10526793
(71) Applicant: AMNUR AMCOR LTD., Tel Aviv 61 027 (IL)
(72) Inventor: Shwarzman,Joel, Givatiayim 53223 (IL)
(74) Representative: Modiano, Guido, Dr.-Ing.

(57) **Abstract**

A solar collector apparatus comprising a transparent surface (5) having a peripheral gasket (32), a housing (7) forming the bottom and sides of the collector and formed with an extension profile (4) along its upper edge including a ledge (12) on which the gasket (32) sits and a locking profile (18) operative to lock into the extension profile (4) and having a horizontal extension (24) forming a seal with the gasket.

## Description

### FIELD OF THE INVENTION

The present invention relates to solar collectors in general, and especially to such solar collectors used in heating water tanks.

### BACKGROUND OF THE INVENTION

Solar collectors generally comprise a rectangular planar structure including an insulated metal housing comprised in four side walls and a bottom side. The top side of the solar collector is a transparent, generally glass, surface. In use the solar collector is positioned so that the transparent surface is oriented toward the sun. Under the glass surface are rows of blackened pipes filled with water and positioned above a reflective inner surface, such that the pipes are heated by rays of the sun that pass through the glass surface. A rubber gasket generally abuts the glass surface at the inner edge of the metal housing to keep water out and to retain heat within the collector. Various screw-type retaining means are known in the art to secure the glass top to the housing. Connector elements protrude from locations on the sides of the collector for attachment to a water tank.

### SUMMARY OF THE INVENTION

It is an object of the present invention to provide an improved solar collector having an improved mechanism for securing a transparent top to a housing of the collector. The housing has a rectangular box-like shape with an open side which is adapted to receive the top which is framed with a gasket. The improved mechanism for securing simplifies the assembly of the collector, provides an improved seal between the top and the metal housing, and provides a higher degree of safety during the use of the solar collector.

The apparatus of the present invention preferably includes an elastomer gasket peripherally mounted on the edge of the transparent top. An extension profile extends upwardly along the edge of the housing. The extension profile includes a ledge on which the gasket sits and a vertical side portion running along the outer edge of the gasket. In addition, the extension profile includes a groove between the ledge and an external extension of the vertical side portion which extends below the ledge. The fitting of the elastomer gasket provides a tight seal to prevent heat from escaping from the solar collector as well as preventing penetration of water from the external surface of the collecter to penetrate to the interior.

The apparatus preferably includes a locking profile adapted to lock onto the upper edge of the extension profile. The locking profile includes a lower flange adapted to fit into the groove of the extension profile and a web adapted to envelop the vertical side portion of the extension profile. In addition, the locking profile includes an upper flange to secure the upper edge of the elastomer gasket when the locking profile is secured in its locked position.

The advantages of some aspects of the present invention over prior art include simplifying the assembly of the collector by using a gasketed top that snaps into the metal housing without requiring the use of tools. The sealing qualities of the present invention are superior to prior art since the gasketed glass that sits on the extension profile of the metal housing also provides a tight seal with the upper flange without requiring any additional elements. Additionally, the hazards that exist in a solar collector frame that is easily pried open with a screwdriver are minimized with the present solar collector that may only be opened with a special tool.

### BRIEF DESCRIPTION OF THE DRAWINGS

The present invention will be understood and appreciated more fully from the following description taken in conjunction with the drawings in which:
Fig. 1 is a perspective drawing of a solar collector in accordance with a preferred embodiment of the invention;
Fig. 2 is a schematic cross-section drawing of the housing of the solar collector of Fig. 1; and
Fig. 3 is a detailed cross-section drawing of a gasketed transparent surface sealed to the housing of Fig. 2.

### DETAILED DESCRIPTION OF THE PREFERRED EMBODIMENT

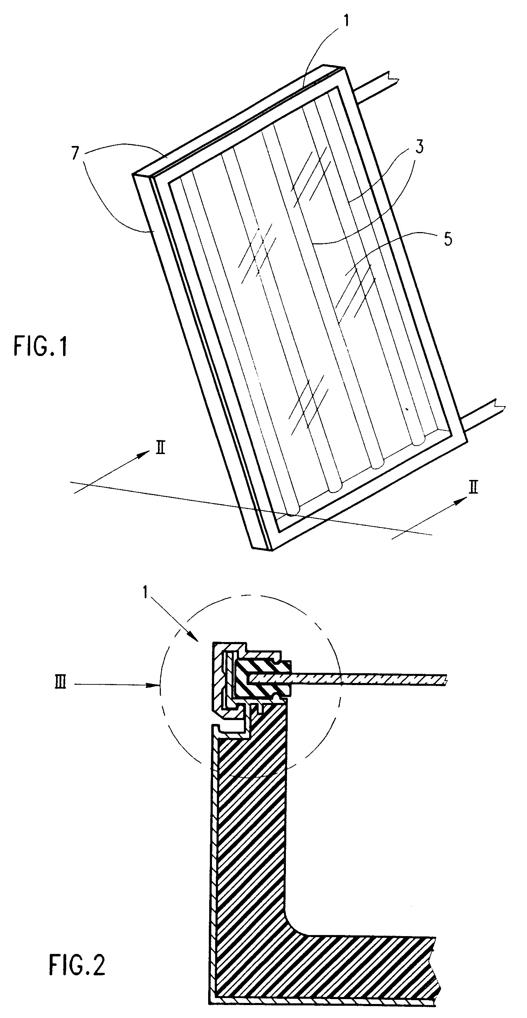

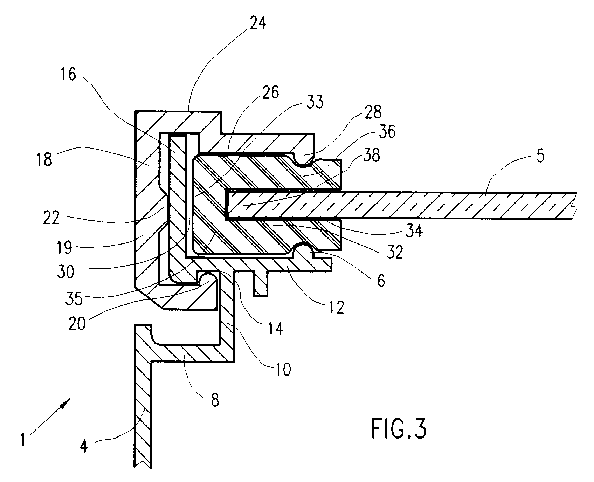

Reference is now made to Figs. 1, 2 and 3. Fig. 1 shows a perspective drawing of a solar collector in accordance with a preferred embodiment of the present invention. Fig. 2 provides a cross-section of the housing of the solar collector which is uniform on the periphery of the solar collector surface. Fig. 3 shows a detailed cross-section of the gasketed transparent surface sealed to the housing.

In a preferred embodiment of the present invention, a solar collector has a transparent, preferably glass, surface 5 facing upward toward the sun. A housing 7 is attached by a joint 1 to the transparent surface 5 according to the present invention. The housing 7 insulates a system of water pipes 3 beneath the transparent surface 5 to preserve a maximum temperature inside the collector. When sun rays pass through the transparent surface 5, the temperature of the water inside the pipes 3 rises. The heated water passes through a hose connected on the side of the solar collector to a water tank (not shown).

In a prefered embodiment of the present invention, the joint 1 of the solar collector, shown in Figs. 2 and 3, is assembled by locking two, preferably metallic, profiles. When locked, the profiles hold a glass surface 5 bordered with an elastomer gasket 32 in place and form a seal with the gasket. An extension profile 4 is preferably a shaped metal section that extends vertically from the bottom of housing 7 to the top of the solar collector. Extension profile 4 extends inward to form a horizontal portion 8 and then vertically to form a vertical portion 10. A horizontal ledge 12 is attached to portion 10 and extends horizontally inward. It is formed near its inner edge with an upward facing ridge 6. Ledge 12 also extends horizontally outward from its junction with portion 10 to meet a vertical side portion 16. Side portion 16 extends downward from ledge 12 to form a concave groove 14 with ledge 12 and portion 10.

A locking profile 18 is preferably a metal channel section that fits onto extension profile 4 by fitting a groove lip 20 into the groove 14 of the extension profile 4. Preferably web 19 is formed with a protrusion 22 which abuts profile 4 midway up vertical side portion 16. An upper rim 24 of locking profile 18 encases the tap of vertical side portion 16 and continues inward to form an upper flange 26. Flange 26 preferably includes a downward facing upper lip 28 at its tip. When profile 18 is in place, its upper flange 26 forms a C-shaped aperture 30 with vertical side portion 16 on the side and ledge 12 on the bottom of the opening. The opening between upper lip 28 and ridge 6 is narrower than the opening between ledge 12 and upper flange 26 so that a tight seal is provided and elastomer gasket 32 is prevented from moving horizontally.

Transparent surface 5 is encased preferably by an elastomer gasket 32 prior to insertion into aperture 30. The elastomer gasket 32 is preferably a U-shaped rubber member formed from one continuous section and includes a thick section 35 at its outer edge and tapers off to a thin section 36 on its inner edge. Transparent surface 5 extends across the entire area of the solar collector and its edge 38 is inserted into a cavity 34 of elastomer gasket 32, such that all four edges of the transparent surface 5 are encased by the gasket.

Assembly of the collector proceeds as follows. The transparent surface 5 encased in elastomer gasket 32 is laid on ledge 12. Lip 20 is placed in groove 14 and locking profile 18 is snapped into place forming a seal between upper lip 28 and the gakset and the ridge 6 and the gasket. Locking profile 18 can only be removed by a tool which turns profile 18 to further deform the gasket so that lip 20 can be removed from groove 14. A screwdriver or other such tool will not remove the locking profile.

It will be appreciated by persons skilled in the art that the present invention is not limited by what has been described hereinabove. Rather the scope of the present invention is defined only by the following claims:
Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A solar collector apparatus comprising:
a transparent surface having a peripheral gasket;
a housing forming the bottom and sides of the collector and formed with an extension profile along its upper edge including a ledge on which the gasket sits; and
a locking profile operative to lock into the extension profile and having a horizontal extension forming a seal with the gasket.

2. Apparatus as in claim 1 wherein the transparent surface is glass.

3. Apparatus according to claim 1 or 2 wherein the gasket is made from rubber.

4. Apparatus according to any of the above claims wherein the ledge comprises a vertical ridge adapted to form a seal with the gasket.

5. Apparatus according to any of the above claims wherein the horizontal extension includes a downward facing upper lip adaped to form a seal with the gasket.

6. Apparatus according to any of the above claims wherein the seal is operative to prevent heat from escaping from inside the collector.

7. Apparatus according to any of the above claims wherein the seal is operative for preventing penetration of water from the outer surface of the collector.

8. Apparatus according to any of the preceding claims wherein the extension profile is formed with a groove below the ledge and the locking profile is formed with a lip adapted to fit into the groove, whereby the locking profile is held in place.
